# EUROPEAN PATENT SPECIFICATION

(11) **EP 3 553 115 B1**
(45) Date of publication and mention of the grant of the patent: **23.08.2023**
(21) Application number: 19020266.3
(22) Date of filing: 05.04.2019
(51) Int. Cl.: C08J 7/043, C08J 7/046, C08J 7/048, C08J 7/04

(54) **MULTILAYER OXYGEN BARRIER FILM WITH IMPROVED HOT WATER RESISTANCE**
MEHRSCHICHTIGE SAUERSTOFFBARRIEREFOLIE MIT VERBESSERTER HEISSWASSERBESTÄNDIGKEIT
FILM MULTICOUCHE BARRIÈRE À L'OXYGÈNE PRÉSENTANT UNE MEILLEURE RÉSISTANCE À L'EAU CHAUDE

(30) Priority: 12.04.2018 KR 20180042851
(43) Date of publication of application: 16.10.2019
(73) Proprietor: SR Technopack Co., Ltd, Chungcheongnam-do (KR); SR Chemical Co., Ltd., Gyeonggi-do (KR)
(72) Inventor: CHO, Dae-hoon, Busan (KR); CHO, Hong-ro, Seoul (KR); SUNG, Dong-hyun, Seochangnamsunhwan-ro (KR)
(74) Representative: Ruzzu, Giammario

(56) References cited:
- DATABASE WPI Week 200551 2005 Thomson Scientific, London, GB; AN 2005-499663 XP002793405, & JP 2005 169982 A (DAINIPPON PRINTING CO LTD) 30 June 2005 (2005-06-30)
- DATABASE WPI Week 200312 2003 Thomson Scientific, London, GB; AN 2003-123509 XP002793406, & JP 2002 292810 A (KYODO PRINTING CO LTD) 9 October 2002 (2002-10-09)
- DATABASE WPI Week 200303 2003 Thomson Scientific, London, GB; AN 2003-032494 XP002793407, & JP 2002 188039 A (KYODO PRINTING CO LTD) 5 July 2002 (2002-07-05)
- DATABASE WPI Week 201578 2015 Thomson Scientific, London, GB; AN 2015-59751R XP002793408, & KR 2015 0107397 A (UNIV YONSEI IND ACAD COOP FOUND) 23 September 2015 (2015-09-23)
- DATABASE WPI Week 200805 2008 Thomson Scientific, London, GB; AN 2008-A66339 XP002793409, & JP 2007 253477 A (KOHJIN CO LTD) 4 October 2007 (2007-10-04)

## Description

### BACKGROUND

The present invention relates to a multilayer oxygen barrier film with improved hot water resistance, and more particularly to a multilayer oxygen barrier film with improved hot water resistance that maintains good oxygen barrier when in contact with hot water for long time.

Oxygen barrier is becoming an important challenge facing a variety of industries including food packaging, and a variety of oxygen barrier films have been developed in association with the oxygen barrier.

The conventional oxygen barrier films are produced using the polyvinyl-di-chloride (PVDC) lamination method. Yet, the PVDC contains chloride that is a substance restricted under the control of environment regulations, and incineration of PVDC results in dioxin emission. For these reasons, there is an urgent demand for the replacement of PVDC with an ecofriendly material.

The lamination technique based on the inorganic oxide deposition method is also used for those materials with good oxygen barrier. But, it has problems in association with extremely low production yield, a resultant rise of production cost, and the considerably low hardness of the deposition layers, which leads to a risk of cracks in the deposition layers due to shrinking and swelling with the moisture absorbed by the substrate film.

In the manufacture of an oxygen barrier film using another oxygen barrier film material, ethylene vinyl alcohol (EVOH), the EVOH film is combined with a substrate film or layered by coextrusion with the substrate film into an oxygen barrier film. Such an EVOH-based oxygen barrier film thus obtained is prone to peel due to low adhesion between the EVOH film and the substrate film. For EVOH, South Korea depends entirely on imports. Hence, a variety of studies on the alternatives to EVOH have been made actively in many domestic and international companies.

On the other hand, the polyvinyl alcohol (PVOH) material is ecofriendly and remarkably excellent in oxygen barrier properties. However, when in contact with hot water, polyvinyl alcohol of the PVOH film absorbs moisture, so the PVOH film tends to degrade in the oxygen barrier properties. This results in the limited use of the PVOH film in the food packaging applications that strongly require oxygen barrier.

In order to solve the problem with PVOH concerning the degradation of hot water resistance and oxygen barrier, many studies have been made, for example, on the method of using PVOH in combination with an inorganic substance to complement the oxygen barrier capacity of PVOH using the water resistance of the inorganic substance and the method of using PVOH in combination with polyurethane compounds to secure water repellence as well as oxygen barrier.

The cited patent document 1 discloses a method of fabricating a multilayer heat-sealable film using polyvinyl alcohol (PVOH). The film prepared by the method of the cited patent document 1 also has the unsolved problem concerning the oxygen barrier properties considerably degraded when in contact with hot water.

### Prior Documentation

### Patent Document

Patent Document 1: KR Laid-Open Publication No. 10-1993-0700176 (published on March 30, 1998)

Document JP2002292810 a method for producing a gas barrier film is disclosed in which a gas barrier layer containing polyvinyl alcohol is provided on a base material and further laminated

Document JP2002188039 discloses a gas barrier coating resin composition for forming a coating film having excellent gas barrier properties, and a gas barrier film on which a gas barrier layer is formed using the gas barrier coating resin composition. Commercially available polyvinyl alcohol is used as the component A in the resin composition. The polyvinyl alcohol used as the component A is preferably one having a degree of polymerization of 100 to 5000 and a degree of saponification of 70% or more, similar to the polyvinyl alcohol used in conventional gas barrier coating composition.

### SUMMARY

For solving the problems with the prior art, the inventors of the present invention have contrived a multi-coated oxygen barrier film with an oxygen barrier layer using polyvinyl alcohol (PVOH) in combination with a silane having at least one epoxy group to improve hot water resistance and maintain good oxygen barrier when in contact with hot water for long time.

It is an object of the present invention to provide a multilayer oxygen barrier film that maintains good oxygen barrier when in contact with hot water for long time.

In accordance with the present invention, there is provided a multilayer oxygen barrier film with improved hot water resistance as defined in the accompanying claims 1 to 3.

Also according to the present invention a method is provided as claimed in claims 4 to 7.

The multilayer oxygen barrier layer has an oxygen permeability of 0.025 to 0.04 cc/m²·day when in contact with water at 90 °C for 20 hours.

The multilayer oxygen barrier film of the present invention is very ecofriendly and able to maintain good oxygen barrier when in contact with hot water for long time.

### BRIEF DESCRIPTION OF THE DRAWINGS

FIG. 1 is a schematic cross-sectional diagram showing the laminated structure of a multilayer oxygen barrier film according to one embodiment of the present invention.

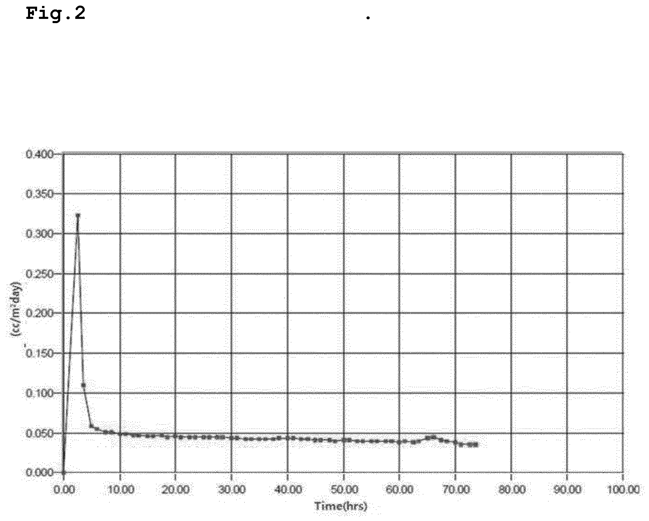

FIG. 2 is a graph showing the oxygen permeability of the multilayer oxygen barrier film according to one embodiment of the present invention.

### DETAILED DESCRIPTION OF THE EMBODIMENTS

Prior to the further specific description of the present invention, it should be understood that the terms used in this disclosure and the claims are not to be confined to the common or dictionary meanings but interpreted to have meanings and concepts coinciding with the technical conceptions of the present invention on the basis of the principle that the concepts of the terms can be properly defined for the sake of the best explanation of the present invention. Therefore, specific details disclosed herein are not to be interpreted as representing all the technical conceptions of the present invention but given as a preferred example of the present invention. Obviously, many equivalents and variations that may replace the embodiments given herein are possible in the light of the teaching of the present disclosure.

Hereinafter, the present invention will be described in further detail with reference to the preferred embodiments in order for those skilled in the art to embody the present invention with ease.

The multilayer oxygen barrier film according to the present invention is available for various applications that may include, but are not limited to, the food packaging industry.

The multilayer oxygen barrier film of the present invention is very ecofriendly and able to maintain good oxygen barrier when in contact with hot water for long time.

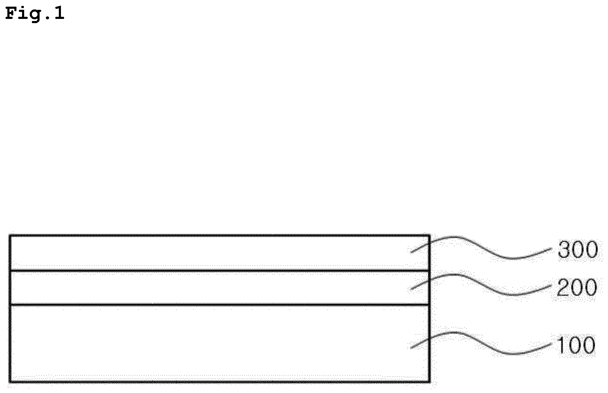

Reference will be given to FIG. 1 to describe the individual layer structures constituting the multilayer oxygen barrier film of the present invention as follows.

As schematically shown in FIG. 1, the multilayer oxygen barrier film with improved hot water resistance according to the present invention includes: a substrate film layer 100, an oxygen barrier layer 300, and an adhesive layer 200 formed between the substrate film layer and the oxygen barrier layer.

The substrate film layer 100 may be constituted with various resin films available for food packaging, such as, for example, PET, nylon, PP, PE, PLA, etc.

The substrate film layer 100 is the thickest layer in the multilayer oxygen barrier film of the present invention and used to back up the multilayer film structurally.

The substrate film layer 100 comes in different thicknesses depending on the use purpose of the multilayer film. For example, the substrate film layer 100 may have a thickness of 10 to 100 µm, preferably about 20 to 50 µm, more preferably about 30 to 40 µm.

The various resin films of PET, nylon, PP, PE, PLA, etc. used as a film forming the substrate film layer 100 may be processed by corona treatment.

Advantageously, forming the substrate film layer using a substrate film processed by corona treatment leads to the enhanced durability of the film.

On the substrate film layer 100 an adhesive layer 200 is formed, which provides adhesion between an oxygen barrier layer 300 and the substrate film layer 100.

The adhesive layer 200 is a polyurethane primer layer. The primer forming the polyurethane primer layer includes 5 to 15 parts by weight of a solid portion with respect to 100 parts by weight of the adhesive layer 200.

The solid portion is comprised of a main component and a hardening agent, specifically 60 to 75 parts by weight of a polyester-based adhesive as the main component and 25 to 40 parts by weight of the hardening agent.

When the main component of the polyester-based adhesive is contained in an amount of less than 60 parts by weight with respect to 100 parts by weight of the solid portion, the primer has a reduction of the adhesiveness and a rise of the hardness. When the content of the main component is greater than 75 parts by weight with respect to 100 parts by weight of the solid portion, it may increase the adhesiveness of the primer, but tends to transfer the adhesive to the opposite side of the film while winding the film after application of the primer coating.

The hardening agent as used herein is an isocyanate-based hardening agent, preferably in an amount of 25 to 40 parts by weight with respect to 100 parts by weight of the adhesive solid portion.

When the content of the isocyanate-based hardening agent is less than 25 parts by weight with respect to 100 parts by weight of the adhesive solid portion, it may increase the adhesiveness of the primer, but tends to transfer the adhesive to the opposite side of the film while winding the film after application of the primer coating. When the isocyanate-based hardening agent is contained in an amount of greater than 40 parts by weight with respect to 100 parts by weight of the adhesive solid portion, the primer has a reduction of the adhesiveness and a rise of the hardness.

The primer coating solution for forming the adhesive layer 200 of the present invention may be prepared, for example, by the method specified as follows.

85 to 95 parts by weight of ethyl acetate is added, followed by adding 60 to 75 parts by weight of a polyester-based adhesive as a main component and 25 to 40 parts by weight of an isocyanate-based hardening agent with respect to 100 parts by weight of the adhesive solid portion and then maintaining a temperature of about 60 °C for about 6 hours under agitation to prepare a coating solution.

The oxygen barrier layer 300 may include polyvinyl alcohol (PVOH) and silane, and the silane may include at least one epoxy group.

Preferably, the silane used to prepare the multilayer film of the present invention includes at least one epoxy group. Examples of the silane as used herein may include 2-(3,4-epoxycyclohexyl) ethyltrimethoxysilane, (3-glycidoxypropyl) trimethoxysilane, 3-glycidoxypropyl methyldiethoxysilane, 2-(3,4-epoxycyclohexyl) ethyltriethoxysilane, 3-glycidoxypropylmethyl dimethoxysilane, 3-glycidoxypropyl triethoxysilane, etc.

The oxygen barrier layer 300 includes 5 to 15 parts by weight of a solid portion with respect to 100 parts by weight of the oxygen barrier layer.

The solid portion of the oxygen barrier layer 300 includes 75 to 95 parts by weight of polyvinyl alcohol (PVOH) and 5 to 25 parts by weight of silane with respect to 100 parts by weight of the solid portion.

When the polyvinyl alcohol (PVOH) is contained in an amount of less than 75 parts by weight with respect to 100 parts by weight of the solid portion of the oxygen barrier layer 300, it may increase the hot water resistance but reduce the oxygen barrier effect. When the polyvinyl alcohol (PVOH) is contained in an amount of greater than 95 parts by weight with respect to 100 parts by weight of the solid portion of the oxygen barrier layer 300, it secures good oxygen barrier in itself but reduces the hot water resistance, resulting in deterioration of the oxygen barrier due to water absorption by the multilayer film when in contact with hot water for long time.

When the content of the silane having at least one epoxy group is less than 5 parts by weight with respect to 100 parts by weight of the solid portion of the oxygen barrier layer 300, it increases the oxygen barrier effect of the coating solution, but reduces the performance of hot water resistance. When the content of the silane having at least one epoxy group is greater than 25 parts by weight with respect to 100 parts by weight of the solid portion of the oxygen barrier layer 300, it increases the hot water resistance, but reduces the oxygen barrier capacity of the coating solution.

The oxygen barrier coating solution for forming the oxygen barrier layer 300 of the present invention may be prepared, for example, by the method specified as follows.

Firstly, 75 to 95 parts by weight of polyvinyl alcohol (PVOH) is slowly added to 70 to 80 parts by weight of distilled water and dissolved by heating up to 90 °C.

Then, 5 to 25 parts by weight of a silane having at least one epoxy group is added, followed by causing a reaction at the room temperature for 6 hours.

It is possible at this point to add about 1.0 part by weight of 0.1N hydrochloric acid.

The addition of 0.1N hydrochloric acid may enhance the hot water resistance of the film.

After completion of the reaction, 15 parts by weight of ethyl alcohol is added to complete an oxygen barrier coating solution.

The polyvinyl alcohol (PVOH) may have a polymerization degree of 500 to 2,500 and a hydrolysis degree of 98 to 100 %.

In the multilayer oxygen barrier film with improved hot water resistance in accordance with further another embodiment of the present invention, the oxygen barrier layer 300 may include 5 to 15 parts by weight of a solid portion with respect to 100 parts by weight of the oxygen barrier layer, and the solid portion may include 75 to 95 parts by weight of polyvinyl alcohol (PVOH) and 5 to 25 parts by weight of silane with respect to 100 parts by weight of the solid portion.

In the multilayer oxygen barrier film with improved hot water resistance in accordance with further another embodiment of the present invention, the oxygen barrier layer 300 is 1 to 1.5 µm thick and the adhesive layer 200 is 0.5 to 1 µm thick.

When the PVOH oxygen barrier layer is less than 1 µm thick, it reduces the oxygen barrier properties due to the extreme thinness; and when the oxygen barrier layer is greater than 1.5 µm thick, its thickness enhances the oxygen barrier properties but causes a rise of the production cost as well as a failure to dry out after application of the coating.

When the adhesive layer 200 is less than 0.5 µm thick, it may deteriorate the adhesion between the substrate film layer 100 and the oxygen barrier layer 300, causing the layers to separate from each other. When the adhesive layer 200 is greater than 1 µm thick, it may deteriorate the flexibility of the multilayer film and cause the layers peeled off from each other due to the difference in the rate of expansion between the layers when in contact with high-temperature heat.

Hereinafter, a description will be given as to the method of preparing the multilayer film of the present invention with reference to the specified examples.

### Preparation Example 1 - Preparation of PVOH Coating Solution A-1

75 g of polyvinyl alcohol (PVOH) having a polymerization degree of 1,500 and a hydrolysis degree of 98 % was slowly added to 610 g of distilled water and dissolved by heating up to 90 °C. 5 g of (3-glycidyloxypropyl) trimethoxysilane and 10 g of 0.1N hydrochloric acid were added to cause a reaction at the room temperature for 6 hours. Subsequently, 150 g of ethyl alcohol was added to prepare a PVOH coating solution A-1.

### Preparation Example 2 - Preparation of PVOH Coating Solution A-2

65 g of polyvinyl alcohol (PVOH) having a polymerization degree of 1,500 and a hydrolysis degree of 98 % was slowly added to 610 g of distilled water and dissolved by heating up to 90 °C. 15 g of (3-glycidyloxypropyl) trimethoxysilane and 10 g of 0.1N hydrochloric acid were added to cause a reaction at the room temperature for 6 hours. Subsequently, 150 g of ethyl alcohol was added to prepare a PVOH coating solution A-2.

### Preparation Example 3 - Preparation of PVOH Coating Solution A-3

65 g of polyvinyl alcohol (PVOH) having a polymerization degree of 1,500 and a hydrolysis degree of 98 % was slowly added to 620 g of distilled water and dissolved by heating up to 90 °C. 18 g of (3-glycidyloxypropyl) trimethoxysilane and 10 g of 0.1N hydrochloric acid were added to cause a reaction at the room temperature for 6 hours. Subsequently, 150 g of ethyl alcohol was added to prepare a PVOH coating solution A-3.

### Preparation Example 4 - Preparation of Adhesive Coating Solution B-1

200 g of a main component of the polyester-based adhesive having 60 wt.% of the solid portion, 30 g of an isocyanate-based hardening agent having 75 wt.% of the solid portion, and 770 g of ethyl acetate were added, followed by agitating at a temperature of 60 °C for 6 hours, to prepare an adhesive coating solution B-1.

### Preparation Example 5 - Preparation of Adhesive Coating Solution B-2

150 g of a main component of the polyester-based adhesive having 60 wt.% of the solid portion, 75 g of an isocyanate-based hardening agent having 75 wt.% of the solid portion, and 775 g of ethyl acetate were added, followed by agitating at a temperature of 60 °C for 6 hours, to prepare an adhesive coating solution B-2.

### Preparation Example 6 - Preparation of Adhesive Coating Solution B-3

100 g of a main component of the polyester-based adhesive having 60 wt.% of the solid portion, 100 g of an isocyanate-based hardening agent having 75 wt.% of the solid portion, and 800 g of ethyl acetate were added, followed by agitating at a temperature of 60 °C for 6 hours, to prepare an adhesive coating solution B-3.

### Comparative Preparation Example 1 - Preparation of PVOH Coating Solution A-4

100 g of polyvinyl alcohol (PVOH) having a polymerization degree of 1,500 and a hydrolysis degree of 98 % was slowly added to 800 g of distilled water and dissolved by heating up to 90 °C. Subsequently, 150 g of ethyl alcohol was added to prepare a PVOH coating solution A-4.

### Comparative Preparation Example 2 - Preparation of PVOH Coating Solution A-5

150 g of polyvinyl alcohol (PVOH) having a polymerization degree of 500 and a hydrolysis degree of 98 % was slowly added to 700 g of distilled water and dissolved by heating up to 90 °C. Subsequently, 150 g of ethyl alcohol was added to prepare a PVOH coating solution A-5.

### Example 1 - Adhesive Coating Solution B-1 and PVOH Coating Solution A-1

A corona-treated 36µm-thick PET film was used as a substrate film, and the adhesive coating solution B-1 was applied on the substrate film to a dry thickness of 1 µm, followed by drying at 80 °C for one minute. Then, the PVOH coating solution A-1 was applied on the coating of the adhesive coating solution B-1 to a thickness of 1.5 µm, followed by drying at 80 °C for one minute to prepare a laminated film P-1.

### Example 2 - Adhesive Coating Solution B-2 and PVOH Coating Solution A-1

A corona-treated 36µm-thick PET film was used as a substrate film, and the adhesive coating solution B-2 was applied on the substrate film to a dry thickness of 1 µm, followed by drying at 80 °C for one minute. Then, the PVOH coating solution A-1 was applied on the coating of the adhesive coating solution B-2 to a thickness of 1.5 µm, followed by drying at 80 °C for one minute to prepare a laminated film P-2.

### Example 3 - Adhesive Coating Solution B-2 and PVOH Coating Solution A-2

A corona-treated 36µm-thick PET film was used as a substrate film, and the adhesive coating solution B-2 was applied on the substrate film to a dry thickness of 1 µm, followed by drying at 80 °C for one minute. Then, the PVOH coating solution A-2 was applied on the coating of the adhesive coating solution B-2 to a thickness of 1.5 µm, followed by drying at 80 °C for one minute to prepare a laminated film P-3.

### Example 4 - Adhesive Coating Solution B-2 and PVOH Coating Solution A-3

A corona-treated 36µm-thick PET film was used as a substrate film, and the adhesive coating solution B-2 was applied on the substrate film to a dry thickness of 1 µm, followed by drying at 80 °C for one minute. Then, the PVOH coating solution A-3 was applied on the coating of the adhesive coating solution B-2 to a thickness of 1.5 µm, followed by drying at 80 °C for one minute to prepare a laminated film P-4.

### Example 5 - Adhesive Coating Solution B-3 and PVOH Coating Solution A-1

A corona-treated 36µm-thick PET film was used as a substrate film, and the adhesive coating solution B-3 was applied on the substrate film to a dry thickness of 1 µm, followed by drying at 80 °C for one minute. Then, the PVOH coating solution A-1 was applied on the coating of the adhesive coating solution B-3 to a thickness of 1.5 µm, followed by drying at 80 °C for one minute to prepare a laminated film P-5.

### Example 6 - Adhesive Coating Solution B-3 and PVOH Coating Solution A-2

A corona-treated 36µm-thick PET film was used as a substrate film, and the adhesive coating solution B-3 was applied on the substrate film to a dry thickness of 1 µm, followed by drying at 80 °C for one minute. Then, the PVOH coating solution A-2 was applied on the coating of the adhesive coating solution B-3 to a thickness of 1.5 µm, followed by drying at 80 °C for one minute to prepare a laminated film P-6.

### Comparative Example 1 - PVOH Coating Solution A-2 (Without Using Adhesive Coating Solution)

A corona-treated 36µm-thick PET film was used as a substrate film, and the PVOH coating solution A-2 was applied on the substrate film to a thickness of 1.5 µm, followed by drying at 80 °C for one minute to prepare a laminated film P-7.

### Comparative Example 2 - Adhesive Coating Solution B-1 and PVOH Coating Solution A-4

A corona-treated 36µm-thick PET film was used as a substrate film, and the adhesive coating solution B-1 was applied on the substrate film to a dry thickness of 1 µm, followed by drying at 80 °C for one minute. Then, the PVOH coating solution A-4 was applied on the coating of the adhesive coating solution B-1 to a thickness of 1.5 µm, followed by drying at 80 °C for one minute to prepare a laminated film P-8.

### Comparative Example 3 - Adhesive Coating Solution B-2 and PVOH Coating Solution A-4

A corona-treated 36µm-thick PET film was used as a substrate film, and the adhesive coating solution B-2 was applied on the substrate film to a dry thickness of 1 µm, followed by drying at 80 °C for one minute. Then, the PVOH coating solution A-4 was applied on the coating of the adhesive coating solution B-2 to a thickness of 1.5 µm, followed by drying at 80 °C for one minute to prepare a laminated film P-9.

### Comparative Example 4 - Adhesive Coating Solution B-2 and PVOH Coating Solution A-5

A corona-treated 36µm-thick PET film was used as a substrate film, and the adhesive coating solution B-2 was applied on the substrate film to a dry thickness of 1 µm, followed by drying at 80 °C for one minute. Then, the PVOH coating solution A-5 was applied on the coating of the adhesive coating solution B-2 to a thickness of 1.5 µm, followed by drying at 80 °C for one minute to prepare a laminated film P-10.

The laminated films P-1 to P-10 of the Examples 1 to 6 and the Comparative Examples 1 to 4 were used to perform the following tests.

### Oxygen Permeability Test

The oxygen permeability of the laminated films was measured according to the ASTM D 3985. The individual laminated films were cut into samples in a size of 7cm x 7cm, and the samples were measured in regards to the oxygen permeability at 23 °C and 0 % (RH) using OX-TRAN 2/21 available from MOCON. The measurement results are presented in Table 1.

### Boiling Test

With another PET film laminated on the coated side, the individual laminated films P-1 to P-10 were cut into samples in a size of 1.5cm x 1cm. Each sample was submerged in water at 90 °C for 30 minutes and took out of water to examine the film condition. The results are presented in Table 1.

### Peel Test

With another PET film laminated on the coated side, the individual laminated films P-1 to P-10 were cut into samples in a size of 1.5cm x 1cm. The laminate interface of each sample was loaded into the Universal testing machine to perform the "T" peel test. The peeling rate was 200 m/min. The test results are presented in Table 1.

**Table 1**

| Div. | Film | Adhesive coating solution | PVOH coating solution | Oxygen permeability (cc/m² ·day) | Boiling | Peel strength (kgf/mm) |
|---|---|---|---|---|---|---|
| Example 1 | P-1 | B-1 | A-1 | 0.022 | Good | 0.0299 |
| Example 2 | P-2 | B-2 | A-1 | 0.023 | Good | 0.0325 |
| Example 3 | P-3 | B-2 | A-2 | 0.025 | Good | 0.0326 |
| Example 4 | P-4 | B-2 | A-3 | 0.037 | Good | 0.0331 |
| Example 5 | P-5 | B-3 | A-1 | 0.022 | Good | 0.0351 |
| Example 6 | P-6 | B-3 | A-2 | 0.024 | Good | 0.0352 |
| Comparative Example 1 | P-7 | - | A-2 | 0.023 | Good | 0.0021 |
| Comparative Example 2 | P-8 | B-1 | A-4 | 0.020 | Bad | 0.0305 |
| Comparative Example 3 | P-9 | B-2 | A-4 | 0.021 | Bad | 0.0322 |
| Comparative Example 4 | P-10 | B-2 | A-5 | 0.022 | Bad | 0.0327 |

Referring to Table 1, the laminated films of the Examples 1 to 6 were good in the boiling test and proved to be excellent in hot water resistance.

On the other hand, the film samples of the Examples 1 to 6 and the Comparative Examples 2, 3 and 4 were brought in contact with water at 90 °C for 1, 3, 5, 10, or 20 hours and then measured in regards to the oxygen permeability (cc/m²-day). The measurement results are presented in Table 2.

**Table 2**

| Div. | Film | 1 hr | 3 hrs | 5 hrs | 10 hrs | 20 hrs |
|---|---|---|---|---|---|---|
| Example 1 | P-1 | 0.022 | 0.023 | 0.024 | 0.025 | 0.026 |
| Example 2 | P-2 | 0.023 | 0.023 | 0.024 | 0.024 | 0.025 |
| Example 3 | P-3 | 0.025 | 0.026 | 0.026 | 0.026 | 0.027 |
| Example 4 | P-4 | 0.037 | 0.038 | 0.038 | 0.039 | 0.040 |
| Example 5 | P-5 | 0.022 | 0.022 | 0.024 | 0.024 | 0.025 |
| Example 6 | P-6 | 0.024 | 0.025 | 0.025 | 0.026 | 0.027 |
| Comparative Example 2 | P-8 | 0.131 | 0.211 | 0.315 | 0.815 | 1.512 |
| Comparative Example 3 | P-9 | 0.134 | 0.312 | 0.425 | 0.855 | 2.201 |
| Comparative Example 4 | P-10 | 0.134 | 0.523 | 0.981 | 1.121 | 2.325 |

Referring to Table 2, the laminated films of the Examples 1 to 6 according to the present invention showed almost no change in the oxygen permeability after a long period of time, while those of the Comparative Examples 2, 3 and 4 had an abrupt increase in the oxygen permeability with an elapse of time. This directly underpins the fact that the multilayer films of the present invention display good hot water resistance and thus maintain the oxygen barrier capability.

## Claims

1. A multilayer oxygen barrier film with improved hot water resistance, comprising the following layers only:
a substrate film layer (100) formed from polyethylene terephthalate (PET), nylon, polypropylene (PP), or polyethylene (PE), with a thickness of 10 to 100 µm, preferably 20 to 50 µm, more preferably 30 to 40 µm;
an oxygen barrier layer (300) with a thickness of 1 to 1.5 µm; and
an adhesive layer (200) formed between the substrate film layer (100) and the oxygen barrier layer (300), with a thickness of 0.5 to 1 µm with no other layer between said substrate film layer (100), oxygen barrier layer (300) and adhesive layer (200),
wherein said the oxygen barrier layer (300) comprises polyvinyl alcohol (PVOH) having a polymerization degree of 1,500 and a hydrolysis degree of 98 %,
said multilayer oxygen barrier film being **characterized in that:**
the oxygen barrier layer (300) comprises 5 to 15 parts by weight of a solid portion comprising 75 to 95 parts by weight of polyvinyl alcohol (PVOH) with respect to 100 parts by weight of the oxygen barrier layer (300),
said solid portion of the oxygen barrier layer (300) further comprises 5 to 25 parts by weight of (3-glycidyl oxypropyl) trimethoxysilane with respect to 100 parts by weight of the solid portion,
such that said multilayer oxygen barrier film has an oxygen permeability of 0.025 to 0.04 cc/m²·day when in contact with water at 90 °C for 20 hours.

2. The multilayer oxygen barrier film with improved hot water resistance as claimed in claim 1, wherein said substrate film layer (100) is obtained by using a corona-treated PET film.

3. A method for making a multilayer oxygen barrier film according to any claim 1 or 2, including:
forming a substrate film layer (100);
forming a polyurethane primer adhesive layer (200) on said substrate film layer (100) for providing adhesion between an oxygen barrier layer (300) and the substrate film layer (100);
forming an oxygen barrier layer (300) including polyvinyl alcohol (PVOH) and (3-glycidyl oxypropyl) trimethoxysilane;
the method being **characterized in that**
said primer forming the polyurethane primer layer includes 5 to 15 parts by weight of a solid portion with respect to 100 parts by weight of the adhesive layer (200), said solid portion being comprised of a main component and a hardening agent, specifically 60 to 75 parts by weight of a polyester-based adhesive as the main component and 25 to 40 parts by weight of the hardening agent, the hardening agent being an isocyanate-based hardening agent in an amount of 25 to 40 parts by weight with respect to 100 parts by weight of said adhesive solid portion;
said oxygen barrier layer (300) includes 5 to 15 parts by weight of a solid portion with respect to 100 parts by weight of the oxygen barrier layer, said solid portion including 75 to 95 parts by weight of polyvinyl alcohol (PVOH) and 5 to 25 parts by weight of silane with respect to 100 parts by weight of the solid portion,
said polyvinyl alcohol (PVOH) having a polymerization degree of 1,500 and a hydrolysis degree of 98 %, and said oxygen barrier layer (300) being 1 to 1.5 µm thick and the adhesive layer (200) being 0.5 to 1 µm thick

4. Method according to claim 3, wherein said oxygen barrier layer (300) is prepared by preparing an oxygen barrier coating solution by:
adding 75 to 95 parts by weight of polyvinyl alcohol (PVOH) to 70 to 80 parts by weight of distilled water and dissolving the same by heating up to 90 °C
adding 5 to 25 parts by weight of a silane having at least one epoxy group and causing a reaction at the room temperature for 6 hours;
adding 15 parts by weight of ethyl alcohol to complete said oxygen barrier coating solution.

5. Method according to claim 4, wherein 1.0 part by weight of 0.1N hydrochloric acid is also added to said barrier coating solution.

6. Method according to any claim 3 to 5, wherein said primer coating solution for forming said adhesive layer (200) of the present invention is prepared by adding 85 to 95 parts by weight of ethyl acetate and by adding 60 to 75 parts by weight of a polyester-based adhesive as a main component and 25 to 40 parts by weight of an isocyanate-based hardening agent with respect to 100 parts by weight of the adhesive solid portion and then maintaining a temperature of 60 °C for 6 hours under agitation.

7. A method as in any claim 3 to 6, wherein said resin films of PET, nylon, PP, PE, PLA, used as a film forming the substrate film layer (100) are processed by corona treatment.

## Patentansprüche

1. Eine mehrschichtige Sauerstoffsperrfolie mit verbesserter Heißwasserbeständigkeit, die nur die folgenden Schichten umfasst:
eine Substratfilmschicht (100), gebildet aus Polyethylenterephthalat (PET), Nylon, Polypropylen (PP) oder Polyethylen (PE), mit einer Dicke von 10 bis 100 µm, vorzugsweise 20 bis 50 µm, mehr bevorzugt 30 bis 40 µm;
eine Sauerstoffsperrschicht (300) mit einer Dicke von 1 bis 1,5 µm; und
eine Klebstoffschicht (200), die zwischen der Substratfilmschicht (100) und der Sauerstoffsperrschicht (300) gebildet ist, mit einer Dicke von 0,5 bis 1 µm, wobei sich keine weitere Schicht zwischen der Substratfilmschicht (100), der Sauerstoffsperrschicht (300) und der Klebstoffschicht (200) befindet,
wobei die Sauerstoffsperrschicht (300) Polyvinylalkohol (PVOH) mit einem Polymerisationsgrad von 1.500 und einem Hydrolysegrad von 98% umfasst,
die mehrschichtige sauerstoffsperrfolie **dadurch gekennzeichnet ist, dass**:
die Sauerstoffsperrschicht (300) 5 bis 15 Teile in Gewicht eines festen Anteils umfasst, der 75 bis 95 Teile in Gewicht aus Polyvinylalkohol (PVOH) in Bezug auf 100 Teile in Gewicht der Sauerstoffsperrschicht (300) umfasst,
wobei der feste Anteil der Sauerstoffbarriereschicht (300) ferner 5 bis 25 Teile in Gewich aus (3-Glycidyloxypropyl)-Trimethoxysilan, bezogen auf 100 Gewichtsteile des festen Anteils, umfasst,
so dass der mehrschichtige Sauerstoffbarrierefilm eine Sauerstoffdurchlässigkeit von 0,025 bis 0,04 cc/m²-Tag aufweist, wenn er 20 Stunden lang bei 90°C mit Wasser in Kontakt ist.

2. Die mehrschichtige sauerstoffsperrfolie mit verbesserter heißwasserbeständigkeit nach Anspruch 1, wobei die Substratfilmschicht (100) unter Verwendung eines koronabehandelten PET-Films erhalten wird.

3. Verfahren zur Herstellung einer mehrschichtigen Sauerstoffsperrfolie nach einem der Ansprüche 1 oder 2, umfassend:
Bildung einer Substratfilmschicht (100);
Ausbilden einer Polyurethan-Primer-Klebstoffschicht (200) auf der Substratfilmschicht (100), um eine Adhäsion zwischen einer Sauerstoffsperrschicht (300) und der Substratfilmschicht (100) herzustellen;
Ausbilden einer Sauerstoffsperrschicht (300), die Polyvinylalkohol (PVOH) und (3-Glycidyloxypropyl)-Trimethoxysilan enthält;
wobei das Verfahren **dadurch gekennzeichnet ist, dass**
der Primer, die die Polyurethan-Primer-Klebstoffschicht bildet, 5 bis 15 Gewichtsteile eines festen Anteils, bezogen auf 100 Gewichtsteile der Klebstoffschicht (200), enthält, wobei der feste Anteil aus einer Hauptkomponente und einem Härtungsmittel besteht, insbesondere 60 bis 75 Gewichtsteile eines Klebstoffs auf Polyesterbasis als Hauptkomponente und 25 bis 40 Gewichtsteile des Härtungsmittels, wobei das Härtungsmittel ein Härtungsmittel auf Isocyanat-Basis in einer Menge von 25 bis 40 Gewichtsteilen, bezogen auf 100 Gewichtsteile des festen Teils des Klebstoffs, ist;
die Sauerstoffsperrschicht (300) 5 bis 15 Gewichtsteile eines festen Anteils, bezogen auf 100 Gewichtsteile der Sauerstoffsperrschicht, enthält, wobei der feste Anteil 75 bis 95 Gewichtsteile Polyvinylalkohol (PVOH) und 5 bis 25 Gewichtsteile Silan, bezogen auf 100 Gewichtsteile des festen Anteils, enthält,
wobei der Polyvinylalkohol (PVOH) einen Polymerisationsgrad von 1.500 und einen Hydrolysegrad von 98% aufweist und die Sauerstoffsperrschicht (300) 1 bis 1,5 µm dick ist und die Klebstoffschicht (200) 0,5 bis 1 µm dick ist.

4. Verfahren nach Anspruch 3, wobei die Sauerstoffbarriereschicht (300) durch Herstellen einer Sauerstoffbarriere-Beschichtungslösung hergestellt wird, durch:
Zugabe von 75 bis 95 Gewichtsteilen Polyvinylalkohol (PVOH) zu 70 bis 80 Gewichtsteilen destilliertem Wasser und Auflösen desselben durch Erhitzen auf 90°C
Zugabe von 5 bis 25 Gewichtsteilen eines Silans mit mindestens einer Epoxidgruppe und Reaktion bei Raumtemperatur für 6 Stunden;
Zugabe von 15 Gewichtsteilen Ethylalkohol zur Vervollständigung der Sauerstoffbarriere-Beschichtungslösung.

5. Verfahren nach Anspruch 4, wobei der Barrierebeschichtungslösung auch 1,0 Gewichtsteil 0,1N Salzsäure zugesetzt wird.

6. Verfahren nach einem der Ansprüche 3 bis 5, wobei die Grundierungsbeschichtungslösung zur Bildung der Klebstoffschicht (200) der vorliegenden Erfindung durch Zugabe von 85 bis 95 Gewichtsteilen Ethylacetat und durch Zugabe von 60 bis 75 Gewichtsteilen eines Klebstoffs auf Polyesterbasis als Hauptkomponente und 25 bis 40 Gewichtsteilen eines Härtungsmittels auf Isocyanat-Basis, bezogen auf 100 Gewichtsteile des festen Klebstoffanteils, und anschließendes Halten einer Temperatur von 60°C für 6 Stunden unter Rühren hergestellt wird.

7. Verfahren nach einem der Ansprüche 3 bis 6, wobei die Harzfilme aus PET, Nylon, PP, PE, PLA, die als Film verwendet werden, der die Substratfilmschicht (100) bildet, durch Coronabehandlung verarbeitet werden.

## Revendications

1. Un film barrière multicouche à l'oxygène avec une résistance à l'eau chaude améliorée, comprenant uniquement les couches suivantes:
une couche de film de substrat (100) formée de polyéthylène téréphtalate (PET), de nylon, de polypropylène (PP) ou de polyéthylène (PE), avec une épaisseur de 10 à 100 µm, de préférence de 20 à 50 µm, plus préférentiellement de 30 à 40 µm;
une couche de barrière à l'oxygène (300) d'une épaisseur de 1 à 1,5 µm; et
une couche adhésive (200) formée entre la couche de film de substrat (100) et la couche de barrière à l'oxygène (300), d'une épaisseur de 0,5 à 1 µm sans autre couche entre ladite couche de film de substrat (100), la couche de barrière à l'oxygène (300) et la couche adhésive (200),
dans laquelle ladite couche barrière à l'oxygène (300) comprend de l'alcool polyvinylique (PVOH) ayant un degré de polymérisation de 1 500 et un degré d'hydrolyse de 98 %,
ledit film multicouche de barrière à l'oxygène étant **caractérisé en ce que**:
la couche barrière à l'oxygène (300) comprend 5 à 15 parties en poids d'une partie solide comprenant 75 à 95 parties en poids d'alcool polyvinylique (PVOH) par rapport à 100 parties en poids de la couche barrière à l'oxygène (300),
ladite partie solide de la couche barrière à l'oxygène (300) comprend en outre 5 à 25 parties en poids de (3-glycidyl oxypropyl) triméthoxysilane par rapport à 100 parties en poids de la partie solide,
de telle sorte que ledit film multicouche de barrière à l'oxygène présente une perméabilité à l'oxygène de 0,025 à 0,04 cc/m²-jour lorsqu'il est en contact avec de l'eau à 90 °C pendant 20 heures.

2. Le film multicouche barrière à l'oxygène à résistance à l'eau chaude améliorée selon la revendication 1, dans lequel ladite couche de film de substrat (100) est obtenue à l'aide d'un film PET traité par effet couronne.

3. Procédé de fabrication d'un film multicouche de barrière à l'oxygène selon l'une quelconque des revendications 1 ou 2, comprenant:
la formation d'une couche de film de substrat (100);
la formation d'une couche adhésive d'amorce en polyuréthane (200) sur ladite couche de film de substrat (100) pour assurer l'adhésion entre une couche barrière à l'oxygène (300) et la couche de film de substrat (100);
la formation d'une couche barrière à l'oxygène (300) comprenant de l'alcool polyvinylique (PVOH) et du (3-glycidyl oxypropyl) triméthoxysilane;
la méthode étant **caractérisée en ce que**
ledit substance d'amorce formant la couche d'amorce polyuréthane comprend 5 à 15 parties en poids d'une partie solide par rapport à 100 parties en poids de la couche adhésive (200), ladite partie solide étant constituée d'un composant principal et d'un agent de durcissement, plus précisément 60 à 75 parties en poids d'un adhésif à base de polyester comme composant principal et 25 à 40 parties en poids de l'agent de durcissement, l'agent de durcissement étant un agent de durcissement à base d'isocyanate dans une quantité de 25 à 40 parties en poids par rapport à 100 parties en poids de ladite partie solide adhésive;
ladite couche barrière à l'oxygène (300) comprend 5 à 15 parties en poids d'une partie solide par rapport à 100 parties en poids de la couche barrière à l'oxygène, ladite partie solide comprenant 75 à 95 parties en poids d'alcool polyvinylique (PVOH) et 5 à 25 parties en poids de silane par rapport à 100 parties en poids de la partie solide,
ledit alcool polyvinylique (PVOH) ayant un degré de polymérisation de 1.500 et un degré d'hydrolyse de 98%, et ladite couche barrière à l'oxygène (300) ayant une épaisseur de 1 à 1,5 µm et la couche adhésive (200) ayant une épaisseur de 0,5 à 1 µm.

4. Procédé selon la revendication 3, dans lequel ladite couche barrière à l'oxygène (300) est préparée en préparant une solution de revêtement barrière à l'oxygène par:
l'ajout de 75 à 95 parties en poids d'alcool polyvinylique (PVOH) à 70 à 80 parties en poids d'eau distillée et en dissolvant le tout en chauffant jusqu'à 90°C
l'ajout de 5 à 25 parties en poids d'un silane ayant au moins un groupe époxy et en provoquant une réaction à température ambiante pendant 6 heures;
l'ajout de 15 parties en poids d'alcool éthylique pour compléter ladite solution de revêtement barrière à l'oxygène.

5. Procédé selon la revendication 4, dans laquelle 1,0 partie en poids d'acide chlorhydrique 0,1N est également ajoutée à ladite solution de revêtement barrière.

6. Procédé selon l'une quelconque des revendications 3 à 5, dans laquelle ladite solution de revêtement d'amorce pour former ladite couche adhésive (200) de la présente invention est préparée avec l'ajout de 85 à 95 parties en poids d'acétate d'éthyle et l'ajout de 60 à 75 parties en poids d'un adhésif à base de polyester comme composant principal et 25 à 40 parties en poids d'un agent de durcissement à base d'isocyanate par rapport à 100 parties en poids de la partie solide de l'adhésif, puis en maintenant une température de 60°C pendant 6 heures sous agitation.

7. Procédé selon l'une des revendications 3 à 6, dans lequel lesdits films de résine de PET, nylon, PP, PE, PLA, utilisés comme film formant la couche de film de substrat (100) sont traités par traitement couronne.
